# EUROPÄISCHE PATENTANMELDUNG

(11) **EP 2 412 964 A1**
(43) Veröffentlichungstag der Anmeldung: **01.02.2012**
(21) Anmeldenummer: 11168746.3
(22) Anmeldetag: 06.06.2011
(51) Int. Cl.: F02M 37/00, F16L 55/04

(54) **Wellrohr einer Kraftstoffleitung**

(30) Priorität: 26.07.2010 DE 102010032219
(71) Anmelder: Continental Automotive GmbH, 30165 Hannover (DE)
(72) Erfinder: Hagist, Dieter, 56112 Lahnstein (DE); Nather, Helmut, 65520 Bad Camberg (DE)

(57) **Zusammenfassung**

Gegenstand der Erfindung ist ein Wellrohr 1 einer Kraftstoffleitung einer Kraftstoffversorgungsanlage eines Kraftfahrzeuges mit zumindest einem biegsamen, Wellen aufweisenden Wellenabschnitt 3, wobei die Wellen aus jeweils einem Wellenberg 8 und einem Wellental 9 bestehen. Der zumindest eine Wellenabschnitt 3 besitzt zumindest einen ersten Bereich 4, in dem die Wellen einen größeren Durchmesser aufweisen.

## Beschreibung

Die Erfindung betrifft ein Wellrohr einer Kraftstoffleitung einer Kraftstoffversorgungsanlage eines Kraftfahrzeuges mit zumindest einem biegsamen, Wellen aufweisenden Wellenabschnitt, wobei die Wellen aus jeweils einem Wellenberg und einem Wellental bestehen.

Solche Wellrohre werden bei heutigen Kraftstoffversorgungsanlagen heutiger Kraftfahrzeuge häufig zum Anschluss einer Kraftstoffpumpe mit einem Filter oder einem Flansch einer Kraftstoff-Fördereinheit eingesetzt und sind aus der Praxis bekannt. Bei der bekannten Kraftstoffversorgungsanlage wird das Wellrohr mit dem Endabschnitt auf einen meist ein Tannenbaumprofil aufweisenden Anschlussstutzen der Kraftstoffpumpe aufgeschoben. Das Endstück ist hierfür zylindrisch gestaltet. Der Wellenabschnitt ermöglicht die Flexibilität des Wellrohres, welche zum Ausgleich von Toleranzen der Kraftstoffversorgungsanlage dient. Darüber hinaus kommt es in Abhängigkeit vom Füllstand im Kraftstoffbehälter zu Relativbewegungen zwischen der Kraftstoffpumpe und dem Flansch, die von dem Wellrohr ausgeglichen werden.

Nachteilig bei dem bekannten Wellrohr ist, dass unerwünschte Druckpulsationen in der von der Kraftstoffpumpe zur Brennkraftmaschine des Kraftfahrzeugs führenden Vorlaufleitung auch durch das Wellrohr geleitet werden und dort Geräusche verursachen. Aufgrund seiner Lage im Kraftfahrzeug sind Geräusche im Kraftstoffbehälter grundsätzlich störend. Zudem sind Druckpulsationen grundsätzlich nachteilig, da sie je nach Größe und Dauer zu Schäden stromabwärts angeordneter Bauteile führen können.

Der Erfindung liegt das Problem zugrunde, ein Wellrohr der eingangs genannten Art so weiter zu bilden, dass es Druckpulsationen und dadurch erzeugten Geräuschen entgegenwirkt.

Dieses Problem wird erfindungsgemäß dadurch gelöst, dass der zumindest eine Wellenabschnitt zumindest einen ersten Bereich besitzt, in dem die Wellen einen größeren Durchmesser aufweisen.

Mit der Anordnung zumindest eines ersten Bereiches wird in dem Wellrohr ein Raum mit vergrößertem Querschnitt geschaffen, in dem sich Druckpulsationen zunächst ebenso ausbreiten können, wie im stromaufwärts gelegenen Teil des Wellrohres. Am stromabwärts gelegenen Ende des ersten Bereiches verringert sich der Durchmesser des Wellrohres wieder auf den Durchmesser des Wellenabschnitts. Diese Durchmesserverringerung verhindert zu einem gewissen Teil die weitere, stromabwärts gerichtete Ausbreitung der Druckpulsationen. Zudem werden Druckpulsationen an dieser Übergangsstelle reflektiert, was zu einer weiteren Dämpfung der Druckpulsationen beiträgt. Auf diese Weise werden nicht nur Druckpulsationen vermindert, es werden auch die dadurch entstehenden Geräusche reduziert.

Neben der Anordnung eines einzelnen ersten Bereiches in einem Wellenabschnitt können auch mehrere erste Bereiche in einem Wellenabschnitt angeordnet werden. Hierdurch lässt sich die Dämpfung von Druckpulsationen weiter verstärken. Sofern das Wellrohr mehrere Wellenabschnitte aufweist, können ein oder mehrere erste Bereiche in einem, mehreren oder allen Wellenabschnitten angeordnet sein.

Eine verbesserte Verminderung von Druckpulsationen und deren weitere Ausbreitung, sowie eine verbesserte Geräuschreduzierung wird gemäß einer vorteilhaften Ausgestaltung dadurch erreicht, dass zumindest in einem ersten Bereich mit Wellen größeren Durchmessers zumindest ein zweiter Bereich mit Wellen angeordnet ist, deren Durchmesser größer als der Durchmesser der Wellen des ersten Bereichs ist.

Die Übergänge eines ersten Bereiches zu einem Wellenabschnitt und eines zweiten Bereiches zu einem ersten Bereich lassen sich besonders einfach herstellen, wenn die jeweiligen Enden der ersten und zweiten Bereiche von je einem Glattrohrabschnitt mit veränderlichem Innendurchmesser gebildet sind. Die glatte Innenwand ermöglicht zudem eine gute Reflexion der Druckpulsationen, was zu deren Dämpfung beiträgt.

In einer einfachen Ausgestaltung ist der zumindest eine erste Bereich und/oder der zumindest eine zweite Bereich in Bezug auf die Länge des Wellrohres symmetrisch im Wellenabschnitt angeordnet. Infolge der symmetrischen Anordnung des oder der Bereiche wird eine Beruhigung der Strömung nach jeder Änderung des Durchmessers der Wellen erreicht.

In Anpassung an den zur Verfügung stehenden Bauraum kann es vorteilhaft sein, wenn der zumindest eine erste Bereich in Bezug auf die Länge des Wellenabschnitts und/oder der zumindest eine zweite Bereich in Bezug auf die Länge des ersten Bereiches jeweils asymmetrisch zu diesem angeordnet ist.

Ein besonders geringer Bauraum wird von einem Wellrohr gemäß einer anderen Ausgestaltung benötigt, wenn jeweils ein Glattrohrabschnitt des zumindest einen ersten Bereiches und des zumindest einen zweiten Bereiches unmittelbar aneinander anschließend angeordnet sind, während die jeweiligen anderen beiden Glattrohrabschnitte der beiden Bereiche mit Abstand zueinander angeordnet sind. Vorzugsweise sind die beiden stromaufwärts liegenden Glattrohrabschnitte unmittelbar aneinander anschließend angeordnet. In dieser Ausgestaltung wird der Querschnitt vom Durchmesser der Wellen des Wellenabschnitts in annähernd einem Schritt auf den Durchmesser der Wellen des zweiten Bereiches vergrößert. Somit resultiert die Bauraumeinsprung aus dem Wegfall der Wellen des stromaufwärts liegenden Teils des ersten Bereiches. Die Bauraumeinsparung kann insbesondere dann zwingend notwendig werden, wenn die Einbaugegebenheiten in einer Kraftstoff-Fördereinheit oder in einem Kraftstoffbehälter ansonsten nur einen wesentlich längeren Verlegeweg des Wellrohres zulassen würden.

Die auf diese Weise erzeugte relativ große Querschnittsänderung vom Durchmesser der Wellen des Wellenabschnitts auf den Durchmesser der Wellen des zweiten Bereiches kann unter Umständen zu unerwünschten Beeinträchtigungen der Strömung führen. Derartige Verwirbelungen lassen sich vermeiden, wenn es sich bei den Glattrohrabschnitten, welche unmittelbar aneinander anschließend angeordnet sind, um die stromabwärts liegenden Glattrohrabschnitte handelt. Mit dieser Ausgestaltung erfolgt die Querschnittsvergrößerung in Schritten, wobei nach jeder Querschnittsvergrößerung ein Strömungsabschnitt mit Wellen angeordnet ist, in dem sich die Strömung zumindest teilweise wieder beruhigen kann. Wird die Durchmesseränderung dabei gering gewählt, trägt dies ebenfalls zu einer ruhigeren Strömung trotz Querschnittsvergrößerung bei. Die stromabwärts liegenden Glattrohrabschnitte haben zudem den Vorteil, dass sie einerseits eine große Reflexionsfläche zur Dämpfung der Druckpulsationen sind. Andererseits stellt dieser Übergang eine starke Drosselstelle dar, mit dem die Ausbreitung der Druckpulsationen vermindert wird. Dieser Effekt lässt sich weiter verstärken, indem die stromaufwärts liegenden Glattrohrabschnitte eine größere axiale Länge als die stromabwärts liegenden Glattrohrabschnitte besitzen. Damit erfolgt auf der stromaufwärts gelegenen Seite ein noch sanfterer Übergang zum vergrößerten Volumen, während die stromabwärts liegenden Glattrohrabschnitte eine noch steilere Reflexionsfläche bilden. In Abhängigkeit von den Strömungsbedingungen können auch die Glattrohrabschnitte der einzelnen Bereiche gleich oder voneinander verschieden gestaltet werden, wobei im letzteren Fall der Grad der Durchmesseränderung in den Glattrohrabschnitten der einzelnen Bereiche unterschiedlich ist.

In einer weiteren vorteilhaften Ausgestaltung weisen der erste und der zweite Bereiche die gleiche Anzahl von Wellen aufweisen. In Abhängigkeit vom zur Verfügung stehenden Bauraum und vom Verlegeweg des Wellrohres können beide Bereiche unterschiedliche Anzahlen von Wellen aufweisen. Für eine ausreichende Beständigkeit des Wellrohres hat sich als vorteilhaft herausgestellt, die Wandstärken der ersten und zweiten Bereiche gleich der Wandstärke der Wellenabschnitte zu gestalten.

Die Erfindung lässt zahlreiche Ausführungsformen zu. Zur weiteren Verdeutlichung ihres Grundprinzips sind einige davon in der Zeichnung dargestellt und werden nachfolgend beschrieben. Diese zeigen in
- Fig. 1: eine perspektivische Darstellung eines erfindungsgemäßen Wellrohres,
- Fig. 2: eine Schnittdarstellung des Wellrohres aus Figur 1,
- Fig. 3: das Wellrohrs aus Figur 1 in einer schematischen Darstellung,
- Fig. 4 - 10: weitere Ausführungen des erfindungsgemäßen Wellrohrs in schematischer Darstellung.

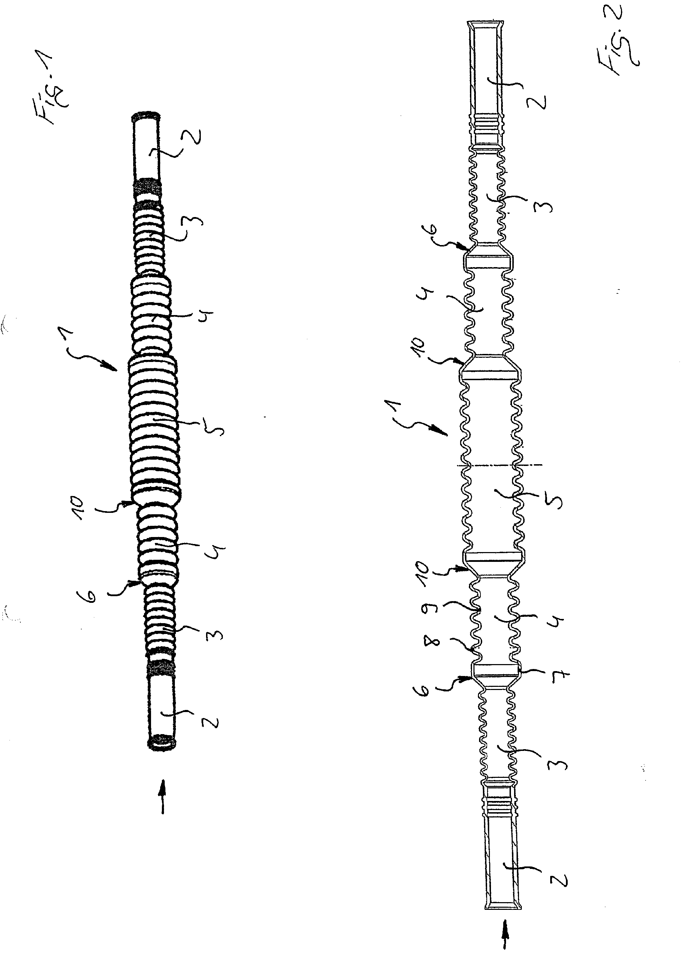

Figur 1 zeigt ein Wellrohr 1 wie es in einer nicht dargestellten Kraftstoff-Fördereinheit eines Kraftstoffbehälters für ein Kraftfahrzeug zum Einsatz kommt. Das Wellrohr ist dabei Teil der Vorlaufleitung, welche beispielsweise den Auslass einer Kraftstoffpumpe mit dem Motor des Kraftfahrzeugs verbindet. Das Wellrohr 1 besitzt als Glattrohr ausgebildete Endstücke 2, welche zur Montage benutzt werden. Das Wellrohr 1 weist einen Wellenabschnitt 3 auf, der sich zwischen den Endstücken 2 über den verbleibenden Verlauf des Wellrohres 1 erstreckt. Symmetrisch im Wellenabschnitt 3 ist ein erster Bereich 4 angeordnet, dessen Wellen einen größeren Durchmesser als die Wellen des Wellabschnitts 3 besitzen. Wiederum symmetrisch im ersten Bereich 4 ist ein zweiter Bereich 5 angeordnet, dessen Wellen einen größeren Durchmesser als die Wellen des ersten Bereiches 4 besitzen. Der erste und der zweite Bereich 4, 5 weisen dieselbe Anzahl von Wellen auf, während der Wellenabschnitt eine größere Anzahl von Wellen besitzt.

Für die weitere Ausgestaltung wird auf Figur 2 Bezug genommen, wobei ein Pfeil die Fließrichtung des Mediums anzeigt. Die Übergänge vom Wellenabschnitt 3 zum ersten Bereich 4 werden von Glattrohrabschnitten 6 gebildet. Die Glattrohrabschnitte 6 besitzen aufgrund des veränderlichen Innendurchmessers eine konische Form, wobei die Wandstärke konstant ist. Die Glattrohrabschnitte 6 besitzen weiter einen zylindrischen Abschnitt 7, der einen verbesserten Übergang zu den Wellen ermöglicht, wobei eine Welle immer von einem Wellenberg 8 und einem Wellental 9 gebildet wird. Die Glattrohrabschnitte 10, welche den zweiten Bereich 5 begrenzen, sind identisch zu den Glattrohrabschnitten 6 ausgebildet. Es ist aber auch denkbar die Glattrohrabschnitte 6, 10 der Bereiche 4, 5 abweichend voneinander zu gestalten. Ebenso ist es möglich, den stromaufwärts liegenden Glattrohrabschnitt eines Bereiches anders als den stromabwärts liegenden Glattrohrabschnitt zu gestalten.

Im Betrieb strömt der von der nicht dargestellten Kraftstoffpumpe geförderte Kraftstoff in Pfeilrichtung durch das Wellrohr 1. Am Glattrohrabschnitt 6 erfolgt eine Aufweitung der Strömung in den ersten Bereich 4 hinein. Im ersten Bereich 4 erfolgt eine Beruhigung der Strömung, bevor sie am stromaufwärts liegenden Glattrohrabschnitt 10 des zweiten Bereiches 5 nochmals aufgeweitet wird. Sofern Druckpulsationen auftreten, breiten sich diese im Wellrohr 1 aus. Am stromabwärts liegenden Glattrohrabschnitt 10 werden diese Druckpulsationen ein erstes Mal reflektiert. Zudem wirkt dieser Glattrohrabschnitt 10 als Strömungsdrossel. Auf diese Weise werden Druckpulsationen gedämpft. Eine weitere Dämpfung erfahren die Druckpulsationen an dem stromabwärts liegenden Glattrohrabschnitt 6 des ersten Bereiches 4, der analog zu dem Glattrohrabschnitt 10 wirkt.

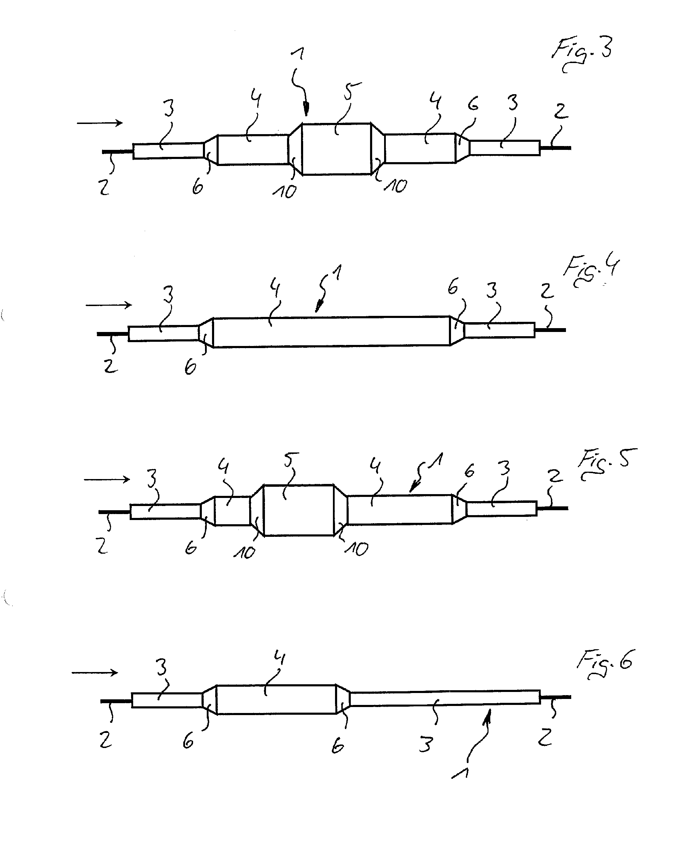

Figur 3 zeigt das Wellrohr aus Figur 1 in einer schematischen Darstellung, in der die Endbereiche 2 als Striche dargestellt sind. Der zweite Bereich 5 mit dem größten Durchmesser ist symmetrisch im ersten Bereich 4 und der erste Bereich 4 ist symmetrisch im Wellenabschnitt 3 angeordnet. Die Übergänge zwischen den Bereichen 4, 5 und dem Wellenabschnitt erfolgt durch die Glattrohrabschnitte 6, 10. Sowohl in Figur 3 als in den folgenden Figuren sind die Abschnitte und Bereiche vereinfacht dargestellt, wodurch die Darstellung der Wellen entfällt.

Das Wellrohr 1 in Figur 4 besitzt lediglich einen ersten Bereich 4, der symmetrisch im Wellenabschnitt 3 angeordnet ist.

Das Wellrohr 1 gemäß Figur 5 entspricht im Wesentlichen dem Wellrohr 1 aus Figur 3. Lediglich der zweite Bereich 5 ist asymmetrisch im ersten Bereich 4 angeordnet.

Figur 6 zeigt eine asymmetrische Anordnung des ersten Bereichs 4 bei einem Wellrohr 1 nach Figur 4.

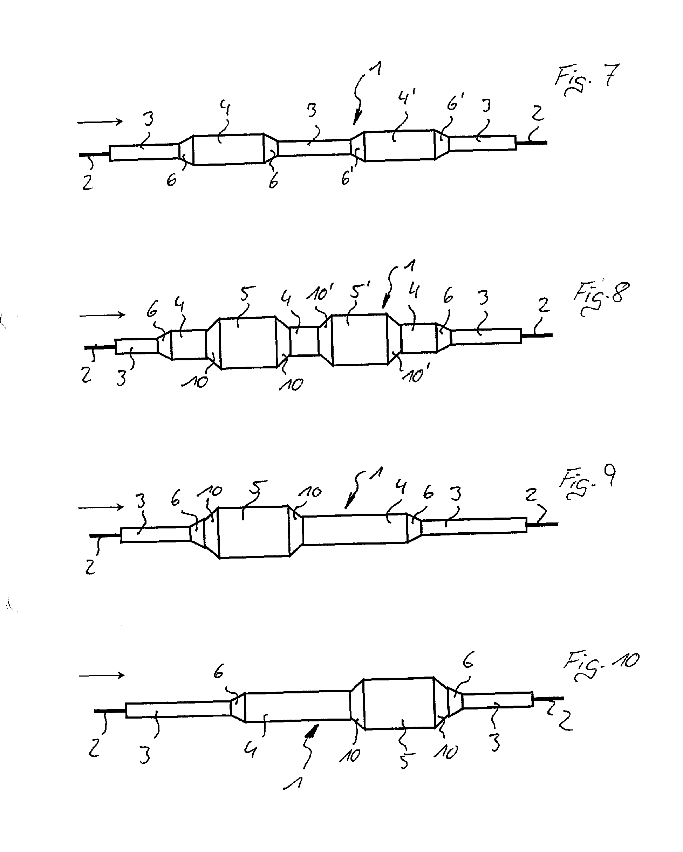

In Figur 7 ist ein Wellrohr 1 mit einem Wellenabschnitt 3 dargestellt, der zwei erste Bereiche 4, 4' besitzt. Anstelle eines zweiten Bereiches wird ein weiterer erster Bereich 4' in Reihe zu dem ersten Bereich 4 angeordnet, so dass Druckpulsationen an zwei stromabwärts liegenden Glattrohrabschnitten 6 reflektiert werden. Ein derartiges Wellrohr 1 benötigt in radialer Erstreckung wenig Bauraum.

Das Wellrohr 1 in Figur 8 unterscheidet sich von dem Wellrohr in Figur 7 dahingehend, dass in dem Wellenabschnitt 3 ein erster Bereich 4 angeordnet ist, und in diesem ersten Bereich zwei zweite Bereiche 5, 5' in Reihe angeordnet sind.

Das Wellrohr 1 in Figur 9 besitzt einen ersten Bereich 4 und einen zweiten Bereich 5, wobei der zweite Bereich 5 derart im ersten Bereich 4 angeordnet ist, dass unmittelbar sich nach dem stromaufwärts gelegenen Glattrohrabschnitt 6 des ersten Bereiches 4 der Glattrohrabschnitt 10 des zweiten Bereichs 5 anschließt, ohne dass der erste Bereich 4 stromaufwärts des zweiten Bereiches 5 eine Welle aufweist. Infolge der großen Querschnittsänderung kommt es zu Verwirbelungen der Strömung, welche bei Druckpulsationen dämpfend auf diese wirken.

Figur 10 zeigt ein Wellrohr 1, welches, bezogen auf die Strömungsrichtung, einen zum Wellrohr nach Figur 9 umgekehrten Aufbau besitzt. Die stromabwärts liegenden Glattrohrabschnitte 10, 6 sind unmittelbar aneinander anschließend angeordnet, wodurch eine große Reflexionsfläche entsteht, an der Druckpulsationen gedämpft werden können.

## Patentansprüche

1. Wellrohr einer Kraftstoffleitung einer Kraftstoffversorgungsanlage eines Kraftfahrzeuges mit zumindest einem biegsamen, Wellen aufweisenden Wellenabschnitt, wobei die Wellen aus jeweils einem Wellenberg und einem Wellental bestehen, **dadurch gekennzeich-**n e t , dass der zumindest eine Wellenabschnitt (3) zumindest einen ersten Bereich (4) besitzt, in dem die Wellen einen größeren Durchmesser aufweisen.

2. Wellrohr nach Anspruch 1, **dadurch gekennzeichnet, dass** zumindest in einem ersten Bereich (4) mit Wellen größeren Durchmessers zumindest ein zweiter Bereich (5) mit Wellen angeordnet ist, deren Durchmesser größer als der Durchmesser der Wellen des ersten Bereiches (4) ist.

3. Wellrohr nach zumindest einem der vorhergehenden Ansprüche, **dadurch gekennzeichnet, dass** die jeweiligen Enden der ersten Bereiche (4) und der zweiten Bereiche (5) von je einem Glattrohrabschnitt (6; 10) mit veränderlichem Innendurchmesser gebildet sind.

4. Wellrohr nach zumindest einem der vorhergehenden Ansprüche, **dadurch gekennzeichnet, dass** der zumindest eine erste Bereich (4) und/oder der zumindest eine zweite Bereich (5) in Bezug auf die Länge des Wellrohres (1) symmetrisch im Wellenabschnitt (3) angeordnet sind.

5. Wellrohr nach Anspruch 3, **dadurch gekennzeichnet, dass** der zumindest eine erste Bereich (4) in Bezug auf die Länge des Wellenabschnitts (3) und/oder der zumindest eine zweite Bereich (5) in Bezug auf die Länge des ersten Bereiches (4) jeweils asymmetrisch zu diesem angeordnet ist.

6. Wellrohr nach Anspruch 5, **dadurch gekennzeichnet, dass** jeweils ein Glattrohrabschnitt (6; 10) des zumindest einen ersten Bereiches (4) und des zumindest einen zweiten Bereiches (5) unmittelbar aneinander anschließend angeordnet sind, während die jeweiligen anderen beiden Glattrohrabschnitte (6; 10) der beiden Bereiche (4, 5) mit Abstand zueinander angeordnet sind.

7. Wellrohr nach zumindest einem der vorhergehenden Ansprüche, **dadurch gekennzeichnet, dass** erste und zweite Bereiche (4, 5) die gleiche Anzahl von Wellen aufweisen.

8. Wellrohr nach zumindest einem der vorhergehenden Ansprüche 1 - 6, **dadurch gekennzeichnet, dass** erste und zweite Bereiche (4, 5) eine unterschiedliche Anzahl von Wellen aufweisen.

9. Wellrohr nach zumindest einem der vorhergehenden Ansprüche, **dadurch gekennzeichnet, dass** die Wandstärken der ersten und zweiten Bereiche (4, 5) gleich der Wandstärke der Wellenabschnitte (3) sind.
